Europäisches Patentamt

European Patent Office

Office européen des brevets

(19)

(11) Veröffentlichungsnummer : **0 136 741**
**B1**

# (12) EUROPÄISCHE PATENTSCHRIFT

(45) Veröffentlichungstag der Patentschrift :
04.03.87

(21) Anmeldenummer : 84201166.0

(22) Anmeldetag : 11.08.84

(51) Int. Cl.⁴ : **F 02 F 3/28**, F 02 F 3/14

(54) **Kolben für Brennkraftmaschinen.**

(30) Priorität : 24.08.83 DE 3330554

(43) Veröffentlichungstag der Anmeldung :
10.04.85 Patentblatt 85/15

(45) Bekanntmachung des Hinweises auf die Patenterteilung : 04.03.87 Patentblatt 87/10

(84) Benannte Vertragsstaaten :
DE FR GB SE

(56) Entgegenhaltungen :
EP-A- 0 037 868
EP-A- 0 075 228
EP-A- 0 075 844
US-A- 3 082 752
SAE JOURNAL, Band 86, Nr. 6, Juni 1978, Seiten 72-
76, New York, USA; "Insulated pistons raise diesel
efficiency"

(73) Patentinhaber : KOLBENSCHMIDT Aktiengesellschaft
Christian-Schmidt-Strasse 8/12 Postfach 1351
D-7107 Neckarsulm (DE)

(72) Erfinder : Sander, Wilfried
Reutlinger Strasse 60
D-7107 Neckarsulm (DE)
Erfinder : Mielke, Siegfried, Dr.
Mergentheimer Strasse 8
D-7107 Neckarsulm (DE)

(74) Vertreter : Rieger, Harald, Dr. et al
Reuterweg 14
D-6000 Frankfurt am Main (DE)

EP 0 136 741 B1

Jouve, 18, rue St-Denis, 75001 Paris, France

**Beschreibung**

Die Erfindung betrifft einen Kolben für Brennkraftmaschinen, insbesondere für aufgeladene Dieselmotoren, mit im mit einer wärmeisolierenden Schicht aus keramischem Werkstoff mit niedrigem Wärmeleitkoeffizienten versehenen Kolbenboden angeordneter Brennraummulde.

Die Forderungen nach geringerem Kraftstoffverbrauch und geringerer Schadstoffemission haben bei Brennkraftmaschinen, insbesondere bei Dieselmotoren, zu einer Steigerung des effektiven Mitteldrucks (Leistung, Drehmoment) geführt, die in vielen Fällen durch Abgasturboaufladung erreicht wird. Die infolge der hohen spezifischen Motorleistung auftretende thermische Belastung des Kolbens zwingt aus Festigkeits- und Funktionsgründen zur verstärkten Anwendung von Kolbenkühlung. Im Gegensatz dazu steht das generelle Interesse, die Abgabe von Verlustwärme aus dem Verbrennungsprozeß an das Kühlmittel und das Schmieröl zu verringern. Dafür gibt es folgende Gründe :

Schmierölmenge, Kühlmittelmenge und Kühlergröße können verringert werden. Weniger Leistung geht zum Antrieb des Lüfters verloren.

Durch Nutzung oder erhöhten Abgastemperatur mit dem Turboverbundsystem kann der Kraftstoffverbrauch verringert werden.

Durch bessere Verdampfung des wandverteilten Kraftstoffs auf der heißen Kolbenbodenoberfläche kann die Abgasqualität, vor allem in der Warmlaufphase, verbessert werden.

Die angestrebte Begrenzung bzw. Verringerung der über das Kühlmittel abzuführenden Verlustwärme führt andererseits zur hohen thermischen Belastung des Kolbenbodens und verlangt deshalb dessen thermische Isolierung.

Zur Verwirklichung eines thermisch isolierten Kolbenbodens sind bereits mehrere Lösungen vorgeschlagen worden. Eine auf dem Aluminiumkolben aufbauende Konstruktion mit aufgeschraubtem, gegenüber der Basis durch Stahlscheiben isoliertem Keramikboden, ist von « Stang, J. H. : Designing Adiabatic Engine Components, SEA 780 069 » beschrieben und untersucht worden. Mit diesem Kolben können Temperaturen um 900 °C an der Kolbenbodenoberfläche erreicht werden. Die Problempunkte dieser « heißen » Lösung liegen in den Herstellungskosten eines den Festigkeitsanforderungen genügenden Keramikoberteils sowie in dem relativ großen Totvolumen oberhalb des ersten Kolbenrings.

Bekannt geworden ist auch ein Aluminiumkolben mit im Kolbenboden angeordneter Brennraummulde, an deren Rand zum Schutz gegen thermische Belastung ein aus einem Keramikwerkstoff mit kleinem Wärmeleitkoeffizienten ($\lambda = 2$ W/mK), kleinem thermischen Längenausdehnungskoeffizienten ($\alpha = 1,5 \times 10^{-6}$/K) und kleinem Elastizitätsmodul ($E = 2 \times 10^4$ N/mm²) bestehender Ring ausreichender Druckfestigkeit aus Aluminiumtitanat ($Al_2TiO_5$) mit eingegossen ist, der eine sehr gute thermische Ermüdungsfestigkeit und Temperaturwechselbeständigkeit besitzt. Durch die Kontraktion des Aluminiumwerkstoffs beim Erstarren nach dem Gießen entsteht zwischen dem Ring und dem ihn umgebenden Aluminiumwerkstoff eine Schrumpfverbindung. Durch die sich daraus ergebenden Druckspannungen werden sowohl der Festsitz des Ringes gewährleistet als auch im Ring selbst Druckspannungen erzeugt. Die Anordnung derartiger Keramikeinlagen ist allerdings auf Bereiche des Kolbenbodens beschränkt, in denen sich diese mit einer ausreichend großen Fläche gegen den sie umgebenden Kolbenwerkstoffs abstützen können.

Bekannt ist auch (DE-A-31 37 731) bei Kolben von Brennkraftmaschinen auf den Kolbenboden zum Zwecke der Wärmedämmung eine aus mehreren alternierend angeordneten Schichten aufgebaute Beschichtung durch Flamm- und Plasmaspritzen aufzutragen, wobei die einzelnen Schichten aus Zirkoniumdioxid und/oder Zirkoniumsilikat, Metall und Cermet bestehen und die äußere Schicht aus Zirkoniumdioxid und/oder Zirkoniumsilikat gebildet ist. Solche Spritzschichten, die, wenn sie eine ausreichende Wärmedämmung bewirken sollen, eine Schichtdicke von 1 bis 2,5 mm besitzen, haften nur dann auf dem Kolbenboden, wenn der Spritzstrahl möglichst senkrecht zu der zu beschichtenden Kolbenbodenoberfläche geführt werden kann und die Kolbenbodenoberfläche keine ausgeprägten Vertiefungen oder Vorsprünge aufweist. Diese Voraussetzungen sind jedoch nur in dem die Brennraummulde umgebenden Bereich des Kolbenbodens und am Feuersteg hinreichend erfüllt, während diese Bedingungen in der Brennraummulde sowie an deren Rand nicht gewährleistet sind.

Aufgabe der vorliegenden Erfindung ist es, bei dem eingangs beschriebenen Kolben einen wärmeisolierten Kolbenboden zu verwirklichen, der trotz der vorstehend genannten Schwierigkeiten den Wärmehaushalt der Brennkraftmaschine im gewünschten Maß beeinflußt, d. h. die über das Kühlmittel abzuführende Verlustwärme verglichen mit einem Kolben ohne wärmeisolierten Kolbenboden deutlich verringert, insbesondere auf wenigstens die Hälfte herabgesetzt, und alle Erwartungen bezüglich Lebensdauer und Wirtschaftlichkeit erfüllt.

Die Lösung dieser Aufgabe erfolgt dadurch, daß erfindungsgemäß ein Teil der wärmeisolierten Schicht durch eine massive, kraft- und/oder formschlüssig gehaltene Keramikeinlage und der andere Teil des Kolbenbodens aus einer am Kolbenwerkstoff fest haftenden Keramikbeschichtung gebildet ist.

Die Keramikeinlage ist im Bereich der Brennraummulde und die Keramikbeschichtung in dem die Brennraummulde umgebenden Bereich des Kolbenbodens angeordnet.

Bei Kolben, bei denen die Wanddicke zwischen dem Grund der Brennraummulde und der Innenseite des Kolbenbodens relativ groß ist, besteht vorzugsweise die ganze Brennraummulde aus einer Keramikeinlage.

Eine weitere Ausbildung der wärmeisolierenden Schicht ist darin zu sehen, daß bei einem Kolben mit kleiner Wanddicke zwischen dem Grund der Brennraummulde und der Innenseite des Kolbenbodens die Seitenwand der Brennraummulde durch die Keramikeinlage und der Grund der Brennraummulde sowie der die Brennraummulde umgebende Bereich des Kolbenbodens durch eine Keramikbeschichtung gebildet ist.

Zweckmäßigerweise erstreckt sich die Keramikbeschichtung des Kolbenbodens bis nahezu an die Kannte zwischen Kolbenboden und Feuersteg, wobei gegebenenfalls die Seitenfläche der Keramikbeschichtung durch den bundförmig gestalteten, eine entsprechende Höhe aufweisenden kolbenbodenseitigen Bereich der Kante geschützt ist, damit ein Verschließ der Kante der Keramikbeschichtung durch mechanische Einflüsse vermieden wird.

Zur weitergehenden thermischen Entlastung, insbesondere des Bereichs der ersten Kolbenringnut kann es angebracht sein, wann die Keramikbeschichtung über die, vorzugsweise abgerundete, Kante zwischen Kolbenboden und Feuersteg bis nahezu an die Kante zwischen Feuersteg und erster Kolbenringnut ausgedehnt ist.

Die in den Kolben eingegossene oder mit Übermaß in eine entsprechend gestaltete Ausnehmung mit Schrumpfsitz eingepaßte Keramikeinlage besitzt im Rahmen der vorzugsweisen Ausgestaltung der Erfindung eine Wanddicke von 3 mm bis 10 mm, insbesondere 3 bis 6 mm, während die mittels eines thermischen Spritzverfahrens aufgetragene keramische Beschichtung eine Dicke von 0,6 bis 4 mm, vorzugsweise 0,6 bis 2 mm, aufweist.

Für den Fall, daß die Keramikeinlage mit einem aus einem Leichtmetallwerkstoff bestehenden Kolben verbunden ist, besteht diese aus einem Keramikwerkstoff mit kleinem Wärmeleitkoeffizienten, vorzugsweise < 10 W/mK, kleinem thermischen Längenausdehnungskoeffizienten, vorzugsweise $< 10 \times 10^{-6}$/K, und kleinem Elastizitätsmodul, vorzugsweise $< 7 \times 10^4$ N/mm². Diese Forderungen sind insbesondere durch Keramikinlagen aus Aluminiumtitanat erfüllt.

Bei aus einem Eisenwerkstoff bestehenden Kolben kann die Keramikeinlage aus einem Keramikwerkstoff mit kleinem Wärmeleitkoeffizienten und mit einem thermischen Längenausdehnungskoeffizient, der demjenigen des verwendeten Eisenwerkstoffs entspricht, gebildet sein.

Die Keramikbeschichtung besteht vorzugsweise aus teilstabilisiertem oder vollstabilisiertem Zirkoniumoxid.

Es ist auch möglich, für die Keramikbeschichtung Chromoxid, das nach dem Auftrag bei Temperaturen um 500 °C gebrannt ist, zu verwenden.

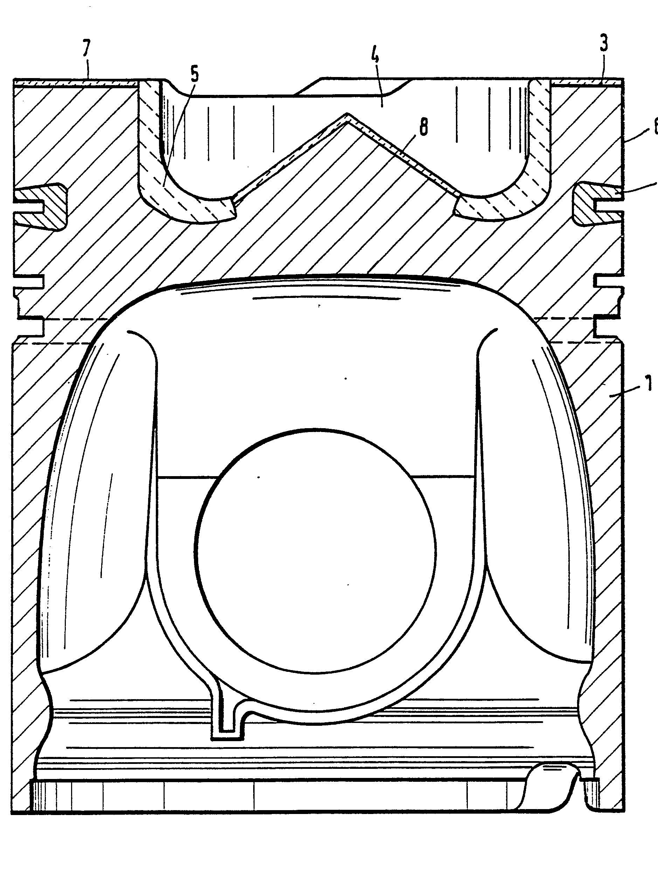

In der Zeichnung ist ein erfindungsgemäß gestalteter Kolben in einem senkrecht zur Kolbenachse liegenden Längsschnitt beispielshaft dargestellt.

Bei dem aus dem Aluminiumwerkstoff der Legierungsgruppe AlSi12CuNiMg gegossenen Kolben 1 mit Ringträger 2 und mit im Kolbenboden 3 angebrachter offener Brennraummulde 4 sind der Bereich der Kante von Kolbenboden 3 und Brennraummulde 4 sowie die Seitenwand der Brennraummulde 4 durch eine massive aus Aluminiumtitanat bestehende Keramikeinlage 5 von 5 mm Dicke gebildet. Der Grund der Brennraummulde 4 sowie der die Brennraummulde 4 umgebende Bereich des Kolbenbodens 3 ist bis zur Kante von Kolbenboden 3 und Feuersteg 6 durch eine 2 mm dicke durch Plasmaspritzen aufgetragene Keramikbeschichtung 7, 8 aus vollstabilisiertem Zirkoniumoxid gebildet.

Der mit der Erfindung erzielte Vorteil besteht insbesondere darin, daß eine nahezu vollständige Wärmeisolierung der brennraumseitigen Oberfläche des Kolbenbodens erreicht wird.

**Patentansprüche**

1. Kolben (1) für Brennkraftmaschinen, insbesondere für aufgeladene Dieselmotoren, mit im mit einer wärmeisolierenden Schicht aus keramischen Werkstoff mit niedrigem Wärmeleitkoeffizienten versehen Kolbenboden (3) angeordneter Brennraummulde (4), dadurch gekennzeichnet, daß ein Teil der wärmeisolierenden Schicht durch eine massive, kraft- und/oder formschlüssig gehaltene Keramikeinlage (5) und der andere Teil aus einer am Kolbenwerkstoff fest haftenden Keramikbeschichtung (7, 8) gebildet ist.

2. Kolben nach Anspruch 1, dadurch gekennzeichnet, daß die Keramikeinlage (5) im Bereich der Brennraummulde (4) und die Keramikbeschichtung (7) in dem die Brennraummulde umgebenden Bereich des Kolbenbodens (3) angebracht sind.

3. Kolben nach den Ansprüchen 1 und 2, dadurch gekennzeichnet, daß die ganze Brennraummulde (4) durch die Keramikeinlage (5) gebildet ist.

4. Kolben nach Anspruch 1, dadurch gekennzeichnet, daß die Seitenwand der Brennraummulde (4) durch die Keramikeinlage (5) und der Grund der Brennraummulde sowie der die Brennraummulde umgebende Bereich des Kolbenbodens (3) durch die Keramikbeschichtung (8, 7) gebildet ist.

5. Kolben nach den Ansprüchen 1 bis 4, dadurch gekennzeichnet, daß sich die in den die Brennraummulde (4) umgebenden Bereich angebrachte Keramikbeschichtung (7) bis nahezu an die Kante zwischen Kolbenboden (3) und Feuersteg (6) erstreckt.

6. Kolben nach Anspruch 5, dadurch gekennzeichnet, daß die Seitenfläche der Keramikbeschichtung (7) durch den bundförmig gestalteten, eine entsprechende Höhe aufweisenden kolbenbodenseitigen Bereich der Kante geschützt ist.

7. Kolben nach den Ansprüchen 1 und 2, dadurch gekennzeichnet, daß sich die in dem die Brennraummulde (4) umgebenden Bereich des Kolbenbodens (3) angebrachte Keramikbeschichtung (7) über die, vorzugsweise verrundete, Kante zwischen Kolbenboden und Feuersteg (6) bis nahezu an die Kante zwischen Feuersteg und erster Kolbenringnut erstreckt.

8. Kolben nach den Ansprüchen 1 bis 7, dadurch gekennzeichnet, daß die Keramikeinlage (5) eingegossen oder mit Übermaß in eine entsprechend gestaltete Ausnehmung mit Schrumpfsitz eingepaßt ist.

9. Kolben nach den Ansprüchen 1 bis 8, dadurch gekennzeichnet, daß die Keramikeinlage (5) einer Wanddicke von mindestens 3 mm bis 10 mm, insbesondere 3 bis 6 m, aufweist.

10. Kolben nach den Ansprüchen 1 bis 9, dadurch gekennzeichnet, daß bei einem Kolben (1) aus einem Leichtmetallwerkstoff die Keramikeinlage (5) aus einem Keramikwerkstoff mit kleinem Wärmeleitkoeffizienten, vorzugsweise $< 10$ W/mK, kleinem thermischen Längenausdehnungskoeffizienten, vorzugsweise $< 10 \times 10^{-6}$/K, und kleinem Elastizitätsmodul, vorzugsweise $< 7 \times 10^4$ N/mm², besteht.

11. Kolben nach Anspruch 10, dadurch gekennzeichnet, daß die Keramikeinlage (5) aus Aluminiumtitanat besteht.

12. Kolben nach den Ansprüchen 1 bis 9, dadurch gekennzeichnet, daß bei einem Kolben (1) aus einem Eisenwerkstoff die Keramikeinlage (5) aus einem Keramikwerkstoff mit kleinem Wärmeleitkoeffizienten und mit einem thermischen Längenausdehnungskoeffizient, der demjenigen des verwendeten Eisenwerkstoffs nahezu entspricht, besteht.

13. Kolben nach den Ansprüchen 1 bis 7, dadurch gekennzeichnet, daß die aufgetragene Keramikbeschichtung (7, 8) bei Temperaturen um 500 °C gebrannt ist.

14. Kolben nach den Ansprüchen 1 bis 7, dadurch gekennzeichnet, daß die Keramikbeschichtung (7, 8) mittels eines thermischen Spritzverfahrens aufgetragen ist.

15. Kolben nach den Ansprüchen 1 bis 7, 13 und 14, dadurch gekennzeichnet, daß die Keramikbeschichtung (7, 8) eine Dicke von 0,6 bis 4 mm, vorzugsweise 0,6 bis 2,0 mm, aufweist.

16. Kolben nach den Ansprüchen 1 bis 7, 14 und 15, dadurch gekennzeichnet, daß die Keramikbeschichtung (7, 8) aus teilstabilisiertem oder voll stabilisiertem Zirkoniumoxid besteht.

17. Kolben nach den Ansprüchen 1 bis 7, 13 und 15, dadurch gekennzeichnet, daß die Keramikbeschichtung (7, 8) aus Chromoxid besteht.

**Claims**

1. A piston (1) for internal combustion engines, particularly for supercharged diesel engines, comprising a piston head, which is formed with a combustion chamber recess (4) and provided with a heat-insulating layer of ceramic material having a low heat conductivity, characterized in that one part of the heat-insulating layer consists of a solid ceramic insert (5), which is non-positively and/or positively held in position, and the other part consists of a ceramic coating (7, 8), which firmly adheres to the piston material.

2. A piston according to claim 1, characterized in that the ceramic insert (5) is provided adjacent to the combustion chamber recess (4) and the ceramic coating (7) is provided in that region of the piston head (3) which is spaced around the combustion chamber recess.

3. A piston according to claims 1 and 2, characterized in that the entire combustion chamber recess (4) is defined by the ceramic insert (5).

4. A piston according to claim 1, characterized in that the side wall of the combustion chamber recess (4) is formed by the ceramic insert (5) and the bottom of the combustion chamber recess and the portion of the piston head (3) surrounding the combustion chamber recess are formed by the ceramic coating (8, 7).

5. A piston according to claims 1 to 4, characterized in that the ceramic coating (7) is provided in that region which is spaced around the combustion chamber recess (4) and extends almost as far as to the edge between the top surface of the piston head (3) and the top land (6).

6. A piston according to claim 5, characterized in that the side face of the ceramic coating (7) is protected by an annular projection provided in a corresponding height at said edge on the side thereof which faces the top surface of the piston head.

7. A piston according to claims 1 and 2, characterized in that the ceramic coating (7) is provided in that region of the top surface of the piston head (3) which is spaced around the combustion chamber recess (4) and the ceramic coating extends beyond the preferably rounded edge between the top surface of the piston head and the top land (6) almost as far as to the edge between the top land and the first piston ring groove.

8. A piston according to claims 1 to 7, characterized in that the ceramic insert (5) is embedded in the cast piston head or is an interference shrinkage fit in a correspondingly shaped recess.

9. A piston according to claims 1 to 8, characterized in that the ceramic insert (5) has a wall thickness of at least 3 mm to 10 mm, particularly 3 to 6 mm.

10. A piston according to claims 1 to 9, characterized in that in a piston (1) consisting of a light alloy the ceramic insert (5) consists of a ceramic material having a small thermal conductivity, preferably below 10 W/mK, a small coefficient of linear expansion, preferably below $10 \times 10^{-6}$/K, and a low modulus of elasticity, preferably below $7 \times 10^4$ N/mm².

11. A piston according to claim 10, characterized in that the ceramic insert (5) consists of aluminum titanate.

12. A piston according to claims 1 to 9, characterized in that the piston (1) consists of a ferrous material and the ceramic insert (5) consists of a ceramic material having a low thermal conductivity and having a coefficient of linear expansion which equals that of the ferrous material employed.

13. A piston according to claims 1 to 7, characterized in that the ceramic coating (7, 8) which has been applied has been burnt at temperatures of about 500 °C.

14. A piston according to claims 1 to 7, characterized in that the ceramic coating (7, 8) has been applied by spraying at high temperature.

15. A piston according to claims 1 to 7, 13 and 14, characterized in that the ceramic coating (7, 8) has a thickness of 0.6 to 4 mm, preferably 0.6 to 2.0 mm.

16. A piston according to claims 1 to 7, 14 and 15, characterized in that the ceramic coating (7, 8) consists of partly stabilized or entirely stabilized zirconium oxide.

17. A piston according to claims 1 to 7, 13 and 15, characterized in that the ceramic coating (7, 8) consists of chromium oxide.


**Revendications**

1. Piston (1) pour moteur à combustion interne, notamment pour moteurs diesel suralimentés, comportant une cavité en forme d'auge (4) formant chambre de combustion qui est disposée dans la tête de piston (3) munie d'une couche isolante du point de vue thermique, constituée en un matériau céramique possédant un faible coefficient de transfert thermique, caractérisé par le fait qu'une partie de la couche isolante du point de vue thermique est formée par un insert massif en céramique (5) maintenu selon une liaison de force et/ou selon une liaison par formes complémentaires, et que l'autre partie est formée par un revêtement céramique (7, 8) adhérant fermement au matériau du piston.

2. Piston suivant la revendication 1, caractérisé par le fait que l'insert en céramique (5) est disposé dans la zone de la cavité en forme d'auge (4) formant chambre de combustion et que le revêtement céramique (16) est disposé dans la zone de la tête de piston (3), qui entoure la cavité en forme d'auge.

3. Piston suivant les revendications 1 à 2, caractérisé par le fait que l'ensemble de la cavité en forme d'auge (4) formant la chambre de combustion est formée par l'insert en céramique (5).

4. Piston suivant la revendication 1, caractérisé par le fait que la paroi latérale de la cavité en forme d'auge (4) formant la chambre de combustion est formée par l'insert en céramique (5) et que le fond de la cavité en forme d'auge formant la chambre de combustion ainsi que la zone de la tête de piston (3) qui entoure la cavité en forme d'auge, est formée par le revêtement céramique (8, 7).

5. Piston suivant les revendications 1 à 4, caractérisé par le fait que le revêtement céramique (7), qui est disposé dans la zone entourant la cavité en forme d'auge (4) formant chambre de combustion, s'étend approximativement jusqu'au niveau de l'arête s'étendant entre la tête de piston (3) et le rebord de feu (6).

6. Piston suivant la revendication 5, caractérisé par le fait que la surface latérale du revêtement céramique (7) est protégée par une partie de l'arête, tournée du côté de la tête de piston et réalisée à la manière d'un collet et possédant une hauteur correspondante.

7. Piston suivant les revendications 1 et 2, caractérisé par le fait que le revêtement céramique (7) qui est disposé dans la zone de la tête de piston (3), qui entoure la cavité en forme d'auge (4) formant la chambre de combustion, s'étend par-dessus de l'arête, de préférence arrondie, présente entre la tête de piston et le rebord de feu (6), approximativement jusqu'au niveau de l'arête présente entre le rebord de feu et la première gorge de segment de piston.

8. Piston suivant les revendications 1 à 7, caractérisé par le fait que l'insert en céramique (5) est coulé ou est monté selon un ajustement fretté, avec une surcote, dans un évidement conformé de façon correspondante.

9. Piston suivant les revendications 1 à 8, caractérisé par le fait que l'insert en céramique (5) possède une épaisseur de paroi comprise entre au moins 3 mm et 10 mm et notamment entre 3 et 6 mm.

10. Piston suivant les revendications 1 à 9, caractérisé par le fait que dans le cas d'un piston (1) constitué en un matériau formé à base d'un métal léger, l'insert en céramique (5) est constitué en un matériau céramique possédant un faible coefficient de transfert thermique, de préférence $< 10$ W/m °K, un faible coefficient de dilatation thermique, de préférence $< 10 \times 10^{-6}$/°K, et un faible module d'élasticité, de préférence $< 7 \times 10^4$ N/mm².

11. Piston suivant la revendication 10, caractérisé par le fait que l'insert en céramique (5) est constitué par du titanate d'aluminium.

12. Piston suivant les revendications 1 à 9, caractérisé par le fait que dans le cas d'un piston (1) constitué en un matériau à base de fer, l'insert en céramique (5) est constitué en un matériau céramique possédant un faible coefficient de transfert thermique et un coefficient de dilatation thermique qui correspond approximativement à celui du fer utilisé.

13. Piston suivant les revendications 1 à 7, caractérisé par le fait que le revêtement céramique déposé (7, 8) est cuit à une température d'environ 500 °C.

14. Piston suivant les revendications 1 à 7, caractérisé par le fait que le revêtement céramique (7, 8) est déposé au moyen d'un procédé de pulvérisation thermique.

15. Procédé suivant les revendications 1 à 7, 13 et 14, caractérisé par le fait que le revêtement céramique (7, 8) possède une épaisseur comprise entre 0,6 et 4 mm et de préférence entre 0,6 et 2 mm.

16. Piston suivant les revendications 1 à 7, 14 et 15, caractérisé par le fait que le revêtement céramique (7, 8) est constitué par un oxyde de zirconium partiellement stabilisé ou totalement stabilisé.

17. Piston suivant les revendications 1 à 7, 13 et 15, caractérisé par le fait que le revêtement céramique (7, 8) est constitué par de l'oxyde de chrome.